# EUROPEAN PATENT SPECIFICATION

(11) **EP 3 409 142 B1**
(45) Date of publication and mention of the grant of the patent: **24.02.2021**
(21) Application number: 17743768.8
(22) Date of filing: 25.01.2017
(51) Int. Cl.: A47B 21/06, H02J 7/00, A47B 13/08, H04B 5/00, A47B 21/00

(54) **INDUCTIVE TABLE**
INDUKTIONSTISCH
TABLE À INDUCTION

(30) Priority: 26.01.2016 ES 201600059 U
(43) Date of publication of application: 05.12.2018
(73) Proprietor: Laserna Larburu, Santos Francisco, 39700 Castro Urdiales (Cantabria) (ES)
(72) Inventor: Laserna Larburu, Santos Francisco, 39700 Castro Urdiales (Cantabria) (ES)
(74) Representative: Pons
(86) International application number: PCT/ES2017/000008
(87) International publication number: WO 2017/129840

(56) References cited:
- CN-A- 104 840 004
- US-A1- 2010 219 183
- US-A1- 2011 062 789
- US-A1- 2011 062 789
- US-A1- 2011 095 618
- US-A1- 2013 207 478
- US-A1- 2013 249 479
- US-A1- 2014 143 933

## Description

The object of the present invention is a table, the main characteristic thereof being that it incorporates an electrical coil on the surrounding peripheral part, on the lateral surface of the tabletop. The incorporated electrical coil has formal and electric properties determined such that once connected to a specific alternating current source, it powers for instance wireless lamps placed on any part of the tabletop surface. It also has a connection system that allows electrical connection to the external electricity source.

In this way, wireless lamps placed on the surface are capable of lighting without needing to be cabled to a plug. Likewise, mobile phones, tablets, fans or other devices provided with wireless charging technology can also be powered just by resting on any part of the table. Provision is made for these devices to be charged or powered at a certain height above the table, even without resting thereon.

### State of the art

In recent years, "inductive power outlets", also known as "wireless chargers" have become increasingly relevant. An inductive power outlet is made up of an inductive electrical coil through which a variable current passes. As a result, a magnetic field that is also variable is generated around the aforementioned power outlet. By moving another electrical coil close to the power outlet, thanks to the phenomenon of electromagnetic induction, a current is generated (called induced current) which is variable and analogous to the current that passes through the inductive coil of the power outlet.

This induced current in the coil allows electrical devices to be powered in the same way as done by the current generated in a connection to two poles with different potential. However, to date, there are very few electronic devices that can be powered by an inductive power outlet or wireless charger.

By incorporating an electrical coil on the outer part of the tabletop of a table, once the coil is connected to an external circuit, said coil will be able to behave as an inductive device, and therefore the table arranged as such will be able to be considered an "inductive power outlet" or "wireless charger". By placing another device on the table that incorporates another electrical coil, the inductive transfer of current between both will be able to begin to take place.

On the market there are small bases or platforms on the surface of which devices are placed, thereby being electrically charged. These bases or platforms, which are usually called wireless chargers, form part of the concept of "inductive power outlet", since the devices placed on the surface (or close to the same) of said platforms "receive power" from them thanks to the phenomenon of electromagnetic induction.

Although inductive platforms intended to charge "computer mouse devices" (Artwizz 1582-IC-PRO-MM) can be found, these platforms have achieved a certain market share for wirelessly charging smartphones (Samsung EP-WI950EBEGWW) and have begun to be manufactured by Chinese manufacturers as well as by Western manufacturers.

In the field of tables, the IKEA company markets tables in which a smartphone charger is integrated in a small hole drilled under the surface of the tabletop. The smartphone becomes charged when it is placed on the specific area of the table below which the wireless power charger is housed.

One can see that the table of the present invention, unlike the aforementioned table by IKEA, will allow smartphones to be charged not only on one specific place of the tabletop, but rather on practically any area the surface thereof.

Office furniture components, are configured to include electronic components that transfer electrical power to peripheral electronic devices including conductive and inductive technologies is disclosed in US2013207478 A1.

### Description of the invention

The invention consists of a table constructed in accordance with claim 1.

The final element of an inductive platform or wireless charger is an induction coil. This induction coil is housed around a table, lamps will be able to be powered and smartphones will be able to be charged by merely resting said devices on the table. To make it so that practically the entire surface of the table can utilize the effects of the magnetic field, the coil is placed on any part of the lateral surface of the table.

Basically, the inductive table is formed by the following elements:
- A tabletop (1), the lateral surface of which will serve for housing the electrical coil (2).
- An electrical coil (2) housed on the aforementioned lateral surface of the tabletop (1).
- A connection device or "connector" (3), which allows the ends of the coil to be connected to an external charging device that provides the alternating current that circulates through the electrical coil (2). This connector (3) will be able to be placed on the surface or embedded in an area of the table that is hardly visible, or in any other suitable area of the table structure.
- An optional lateral coating (6) suitable for eventually required electrical protection and safety of the coil and of assembled table of the invention.

The place for housing the coil on the lateral surface of the tabletop does not have to necessarily occupy the entire lateral surface of the table.

The place for housing the coil can be prefabricated by means of grooves for placing the cable, wire or tape that makes up the coil.

The induction coil can be made up of a cable, conducting wire, or a flat strip of conductive material. On the market there are flat strips of conductive material, normally copper, that further incorporate an adhesive on one of the faces thereof. This option notably facilitates the installation of the coil on the lateral surface of the tabletop of the table.

The coil connector will be able to be either separate or joined to any part of the table, the most favourable configuration thereof being that of a female socket embedded in any part of the table structure. Also envisaged is the configuration in which the connecting cable from the external power source is conveniently camouflaged through one of the legs of the table.

Once the coil is placed on the lateral surface of the tabletop, this lateral surface may be covered to protect the coil against external agents. The covering can be paint, plastic, wood or any other suitable material. The covering can also serve as a decorative element and will further provide the table with the required electrical safety conditions.

The shape of the tabletop or of the lateral surface thereof does not limit the scope of the present invention.

The existence of an inner hole in the tabletop must also be envisaged. In this case the inner hole of the tabletop could also incorporate an electrical coil similar to that which is arranged on the outside. In this case, the option of electrical coil being placed either on the external lateral surface of the tabletop or on the lateral surface inside the hole of the table, or in both, must be envisaged.

The possibility of placing a lateral coating on the electrical coil when necessary for the protection thereof against the external environment and/or for incorporating the eventually required electrical safety conditions must be envisaged.

The possibility of placing an additional upper coating on the tabletop of the table, such as a lining, tablecloth, melamine layer, glass, methacrylate or any other coating, the maximum expression of which can be that of a new tabletop placed over the first one, must be envisaged. Even with this additional tabletop, the table of the invention would still be operative.

To finish the description of the object of this invention, some of the main principles thereof are provided below:
- By means of an inductive table, several wireless devices can be simultaneously powered, placed on any part on the surface of the tabletop.
- By means of an inductive table, several wireless devices can be simultaneously powered, even placed below the surface of the tabletop.
- By means of an inductive table, several wireless devices can be simultaneously powered, even placed on other already existing objects resting on the tabletop. For example, one can charge a smartphone during the use thereof while holding it in the hand, without having to put it down, or by placing it on a tablecloth or on a book or on a magazine that is already resting on the table.

The material or the shape of the table, the material or the shape of the electrical coil, the material or the shape of the side of the tabletop of the table, the material or the type of connector, the material or the type of coatings, or the number of turns of conducting wire around the table that make up the electrical coil are not limiting features in the present invention.

For those skilled in the art, other uses, variants, advantages and characteristics of the invention may be deduced from both the description and the practical use of the invention. The following examples and drawings are provided by way of illustration and are not meant to restrict the present invention.

### Brief description of the figures

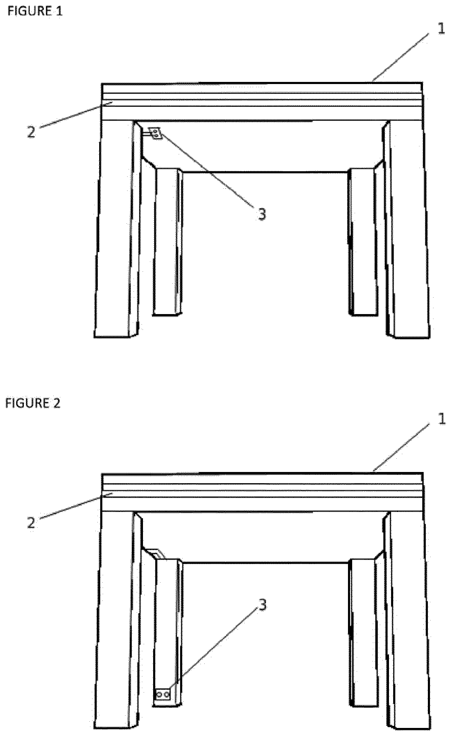

**Figure 1** shows the table of the invention in a way so that any person skilled in the art can easily build it. In the figure, one can see a tabletop (1) in a square shape, wherein an electrical coil (2) formed by three turns of electrical cable (which can be a 1.5 mm², black halogen-free H07Z1K cable) has been placed on the side thereof. The ends of the electrical coil end at a connector (3), conveniently fastened to the lower part of the tabletop of the table, which can either be a simple terminal with two contacts (adhered, screwed or embedded), or a female socket, among many other options for connecting the electrical coil (2) with external power.
**Figure 2** is a modification of Figure 1, in which the ends of the electrical coil (2) are camouflaged in the extension thereof by one of the legs of the table so that the connector (3) may be in a favourable position, close to the ground.

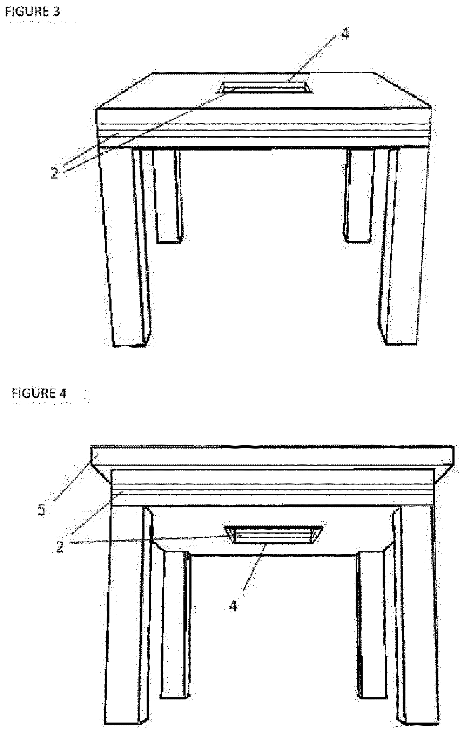

**Figure 3** is a modification of Figure 1, wherein there is a hole (4) in the tabletop, able to house an electrical coil (2) on the surface thereof if necessary.
**Figure 4** shows the variant of the inductive table of Figure 3, wherein an additional tabletop (5) has been placed on the tabletop wherein the electrical coil (2) is housed. Furthermore, in this case, one can see that the electrical coil (2) occupies the outer and inner sides of the tabletop.

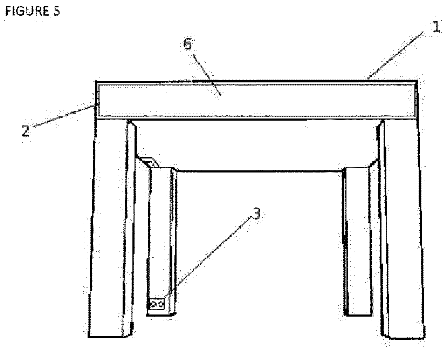

**Figure 5** shows a lateral coating (6) on the electrical coil (2) to guarantee the conditions of electrical safety and protection for the table against the external environment.

## Claims

1. An inductive table comprising:
- a first tabletop (1),
- a first electrical coil (2), having two ends and housed around the lateral surface of the tabletop (1),
- an external power electrical device, and
- a connector (3), adapted to connect the two ends of the electrical coil to the external power electrical device.

2. The inductive table according to the preceding claim, further comprising a lateral coating (6) for covering the first electrical coil (2).

3. The inductive table according to any of the preceding claims, wherein the tabletop comprises an inner hole (4).

4. The inductive table according to claim 3, further comprising a second electrical coil which is housed around the lateral surface of the inner hole (4).

5. The inductive table according to any of the preceding claims, wherein the electrical coils (2) are made from an electrical cable.

6. The inductive table according to any of claims 1-4, wherein the electrical coils (2) are made from a conducting wire.

7. The inductive table according to any of claims 1-4, wherein the electrical coils (2) are made from a flat tape of conductive material.

8. The inductive table according to any of the preceding claims, wherein the connector (3) is below the tabletop (1).

9. The inductive table according to any of claims 1-7, wherein the connector (3) is located on a leg of the table.

10. The inductive table according to claim 9, wherein the connector (3) is a female socket embedded in the lower part of a leg of the table.

11. The inductive table according to any of the preceding claims, wherein the first tabletop (1) is polygonal.

12. The inductive table according to any of claims 1-10, wherein the first tabletop (1) is circular.

13. The inductive table according to any of claims 1-10, wherein the first tabletop (1) is amorphous.

14. The inductive table according to any of the preceding claims, further comprising a second tabletop (5) placed over the first tabletop (1).

## Patentansprüche

1. Induktiver Tisch, umfassend:
- eine erste Tischoberfläche (1),
- eine erste elektrische Spule (2), aufweisend zwei Enden und die um die laterale Oberfläche der Tischoberfläche (1) angeordnet sind,
- eine externe elektrische Stromvorrichtung und
- einen Steckverbinder (3), der dazu ausgelegt ist, an den zwei Enden der elektrischen Spule mit der externen elektrischen Stromvorrichtung verbunden zu werden.

2. Induktiver Tisch nach dem vorhergehenden Anspruch, ferner umfassend eine laterale Beschichtung (6) zum Bedecken der ersten elektrischen Spule (2).

3. Induktiver Tisch nach einem der vorhergehenden Ansprüche, wobei die Tischoberfläche ein inneres Loch (4) umfasst.

4. Induktiver Tisch nach Anspruch 3, ferner umfassend eine zweite elektrische Spule, die um die laterale Oberfläche des inneren Lochs (4) untergebracht ist.

5. Induktiver Tisch nach einem der vorhergehenden Ansprüche, wobei die elektrischen Spulen (2) aus einem elektrischen Kabel hergestellt sind.

6. Induktiver Tisch nach einem der Ansprüche 1 bis 4, wobei die elektrischen Spulen (2) aus einem leitfähigen Draht hergestellt sind.

7. Induktiver Tisch nach einem der Ansprüche 1 bis 4, wobei die elektrischen Spulen (2) aus einem flachen Band aus leitendem Material hergestellt sind.

8. Induktiver Tisch nach einem der vorhergehenden Ansprüche, wobei der Steckverbinder (3) unterhalb der Tischoberfläche (1) ist.

9. Induktiver Tisch nach einem der Ansprüche 1 bis 7, wobei sich der Steckverbinder (3) auf einem Tischbein befindet.

10. Induktiver Tisch nach Anspruch 9, wobei der Leiter (3) eine Buchse ist, die im unteren Teil eines Tischbeins eingebettet ist.

11. Induktiver Tisch nach einem der vorhergehenden Ansprüche, wobei die Tischoberfläche (1) polygonal ist.

12. Induktiver Tisch nach einem der Ansprüche 1 bis 10, wobei die erste Tischoberfläche (1) rund ist.

13. Induktiver Tisch nach einem der Ansprüche 1 bis 10, wobei die erste Tischoberfläche (1) amorph ist.

14. Induktiver Tisch nach einem der vorhergehenden Ansprüche, ferner umfassend eine zweite Tischoberfläche (5), die über der ersten Tischoberfläche (1) angeordnet ist.

## Revendications

1. Table à induction comprenant :
- un premier dessus de table (1),
- une première bobine électrique (2), ayant deux extrémités et logée autour de la surface latérale du dessus de table (1),
- un dispositif électrique d'alimentation externe, et
- un connecteur (3), adapté pour connecter les deux extrémités de la bobine électrique au dispositif électrique d'alimentation externe.

2. Table à induction selon la revendication précédente, comprenant en outre un revêtement latéral (6) pour recouvrir la première bobine électrique (2).

3. Table à induction selon l'une quelconque des revendications précédentes, dans laquelle le dessus de table comprend un trou interne (4).

4. Table à induction selon la revendication 3, comprenant en outre une deuxième bobine électrique qui est logée autour de la surface latérale du trou interne (4).

5. Table à induction selon l'une quelconque des revendications précédentes, dans laquelle les bobines électriques (2) sont constituées d'un câble électrique.

6. Table à induction selon l'une quelconque des revendications 1 à 4, dans laquelle les bobines électriques (2) sont constituées d'un fil conducteur.

7. Table à induction selon l'une quelconque des revendications 1 à 4, dans laquelle les bobines électriques (2) sont constituées d'un ruban plat de matériau conducteur.

8. Table à induction selon l'une quelconque des revendications précédentes, dans laquelle le connecteur (3) est sous le dessus de table (1).

9. Table à induction selon l'une quelconque des revendications 1 à 7, dans laquelle le connecteur (3) est situé sur un pied de la table.

10. Table à induction selon la revendication 9, dans laquelle le connecteur (3) est une prise femelle incorporée dans la partie inférieure d'un pied de la table.

11. Table à induction selon l'une quelconque des revendications précédentes, dans laquelle le premier dessus de table (1) est polygonal.

12. Table à induction selon l'une quelconque des revendications 1 à 10, dans laquelle le premier dessus de table (1) est circulaire.

13. Table à induction selon l'une quelconque des revendications 1 à 10, dans laquelle le premier dessus de table (1) est amorphe.

14. Table à induction selon l'une quelconque des revendications précédentes, comprenant en outre un deuxième dessus de table (5) placé sur le premier dessus de table (1).
